# EUROPÄISCHE PATENTSCHRIFT

(11) **EP 3 688 331 B1**
(45) Veröffentlichungstag und Bekanntmachung des Hinweises auf die Patenterteilung: **21.08.2024**
(21) Anmeldenummer: 18766156.6
(22) Anmeldetag: 30.08.2018
(51) Int. Cl.: F16D 3/40, F16D 3/38, F16D 3/41

(54) **VERFAHREN UND VORRICHTUNG ZUM SCHMIEREN EINES KREUZGELENKES**
METHOD AND DEVICE FOR LUBRICATING A UNIVERSAL JOINT
PROCÉDÉ ET DISPOSITIF POUR LUBRIFIER UN JOINT DE CARDAN

(30) Priorität: 25.09.2017 DE 102017122107
(43) Veröffentlichungstag der Anmeldung: 05.08.2020
(73) Patentinhaber: Voith Patent GmbH, 89522 Heidenheim (DE)
(72) Erfinder: RITTER, Simon, 89423 Gundelfingen (DE); MAIER, Dieter, 89537 Giengen (DE)
(86) Internationale Anmeldenummer: PCT/EP2018/073324
(87) Internationale Veröffentlichungsnummer: WO 2019/057462

(56) Entgegenhaltungen:
- CN-A- 103 775 519
- JP-A- 2006 002 845
- SU-A1- 525 567
- US-A- 3 377 820
- US-A- 3 828 578

## Beschreibung

Die Erfindung betrifft ein Verfahren und eine Vorrichtung zum Schmieren eines Kreuzgelenkes.

Es ist aus der EP 0 878 657 A2 eine Schmiervorrichtung für eine Gelenkwelle mit einem Kreuzgelenk bekannt. Das Kreuzgelenk weist eine Gelenkgabel und ein Kreuzgelenk mit schmierbaren Lagern auf. Es ist ein gehäusefestes Bauteil vorgesehen, durch das der Schmierstoff zur Gelenkwelle und durch diese hindurch mittels eines Übertragungselementes zu den Gelenklagern geführt wird. Dadurch erfolgt die Schmierung von einem stationären Bauteil aus, dass eine Schmierung unabhängig von der Bewegung der Gelenkwelle erfolgen kann. Die Schmierstelle ist leicht zugänglich und zum Anschluss an eine Zentralschmierung geeignet.

Aus der US 3,337,820 ist ein Kreuzgelenk mit Lagern bekannt. Die Lager des Kreuzgelenkes können gleichzeitig geschmiert werden. Es ist eine äußere Zuführung für Schmiermittel vorgesehen. Durch diese äußere Zuführung werden Kreuzpassagen mit Schmiermittel beaufschlagt. Diese Schmiermittelpassagen sind innerhalb des Kreuzes mittig angeordnet und mit den Lagern verbunden. Durch Kanäle kann das alte Schmiermittel aus dem Kreuzgelenk an einer Dichtung vorbei aus dem Kreuzgelenk herausgedrückt werden. Dieser Anordnung lag die Aufgabe zugrunde für eine Erhöhung der Lebensdauer die Lager mit frischem sauberem Schmiermittel zu fluten und dadurch gebrauchtes Schmiermittel mit Fremdpartikeln zu entfernen.

Aus der US 3,828,578 ist ebenfalls ein Kreuzgelenk mit einem zentral angeordneten kreuzförmigen Schmierkanal bekannt. Dieser Schmierkanal kann mit Schmiermittel über einen Einlass beaufschlagt werden. Diesem Patent lag die Aufgabe zu Grunde die Schmierung zu verbessern. Am Kreuzungspunkt der Schmierkanäle in der Mitte des Kreuzelementes des Kreuzgelenkes ist ein drehbares Element für eine Schmiermittelverteilung vorgesehen.

Aus der CN 103775519 A ist ein Kreuzgelenk mit zentral im Kreuzelement verlaufenden Ölkanälen bekannt. angeordneten Schmierkanälen bekannt. An den Enden des Kreuzgelenkes sind Einlässe und ein Reservoir für die Aufnahme von Schmiermittel vorgesehen. Über die Schmierkanäle sind die Reservoirs miteinander verbunden, so dass auch bei einer verstopften Injektionszuführung eine Schmierung der Lager sichergestellt ist.

Aus der CN 202660200 U ist eine Schmiervorrichtung für ein Kreuzgelenk bekannt. Durch diese Schmiervorrichtung ist eine Online-Schmierung möglich. Für die Bereitstellung des Schmiermittels ist auf der Gelenkwelle ein rotierender Ring mit einer Düse bekannt. Es sind zwei Zuführungen zu jeder Seite der Gelenkgabel gezeigt.

Aus der CN 20445885 U ist es bekannt, einer Kreuzwelle eines Kreuzgelenkes für jedes Lager eine separate Schmiereinrichtung vorzusehen. Dafür wird die Kreuzverbindung in der Kreuzwelle des Kreuzgelenkes verschlossen.

Aus der DE 10 2016 210 587 ist eine Kreuzgelenkanordnung bekannt, bei dem die Lager des Kreuzgelenkes durch eine zentral in jedem der Lagerdeckel ausgebildete Öffnung mit Schmiermittel geschmiert werden können. Dafür ist es jedoch erforderlich, dass von jedem Deckel aus ein Schmieren erfolgt. In einigen Einbausituationen sind die Kreuzgelenke nicht von allen Seiten gleich gut zugänglich. Somit kommt es häufiger vor, dass die gut zugänglichen Schmiermittelzugänge bevorzugt bedient werden und die schwer zugänglichen Schmiermittelzugänge schon mal ausgelassen werden. Dadurch treten an den nicht ausreichend geschmierten Lagerungen vermehrt Schäden auf. Auch kann ein Positionswechsel von einer der Seiten der Gelenkwelle auf die gegenüberliegende Seite der Gelenkwelle für das Schmieren unkomfortabel sein, so dass manchmal nur die von einer der Seiten der Gelenkwelle zugänglichen Deckeln mit den Schmiermittelöffnungen mit Schmiermittel beaufschlagt werden. Auch dadurch können vermehrt Defekte an den unzureichend geschmierten Lagerungen entstehen.

JP2006002845 A offenbart ein Zapfenkreuz mit zwei Schmiermitteldurchführungen die gemeinsam mit Schmieröl befüllt werden.

SU525567 A1 offenbart ein Zapfenkreuz mit einer Mehrzahl von Durchführungen, die über zwei zentrale Schmiermittelzuführungen befüllt werden.

Nachteilig ist bei den bekannten Schmiervorrichtungen, dass diese kostenintensiv schon allein aufgrund der Teilezahl ist. Weiterhin kommt hinzu, dass die mitrotierenden Teile der Schmiervorrichtung mit beschleunigt werden müssen und somit auch den Beschleunigungen standhalten müssen.

Der Erfindung liegt die Aufgabe zu Grunde, eine Schmierung eines Kreuzgelenkes komfortabler zu ermöglichen.

Insbesondere ist es die Aufgabe der Erfindung die Zugänglichkeit zur Schmierung von Lagerungen eines Kreuzgelenkes in einer diskreten Stillstandsposition zu erleichtern.

Die Aufgabe der Erfindung wird dadurch gelöst, dass in dem Zapfenkreuz mindestens eine Durchführung für Schmiermittel ausgebildet ist. Die Durchführung ist für die Zuführung von Schmiermittel zu einer der Lagerungen vorgesehen. Durch die Durchführung ist es möglich, eine Lagerung eines Zapfenkreuzendes zu schmieren, wobei die Lagerung in einem Winkel von 90° oder 180° angeordnet sein kann. Die Durchführung dient dabei der Zuführung von Schmiermittel. Somit ist es möglich, die diesem Zapfenende zugeordnete Lagerung und eine weitere Lagerung mittels der Durchführung mit Schmiermittel zu versorgen. Dabei können beide Lagerungen getrennt voneinander mit Schmiermittel beaufschlagt werden. Dadurch ist es auch möglich, den Druck, mit dem das Schmiermittel zugeführt wird, für jeden Schmiervorgang und abhängig von der Art der Zuführung bzw. der Position des zu schmierenden Lagers zu wählen.

In der Regel umfasst eine Lagerung eines Zapfenendes eines Zapfenkreuzes ein Axiallager und ein Radiallager.

Erfindungsgemäß ist die Durchführung in dem Zapfenkreuz beabstandet zu mindestens einer der Mittenachsen des Zapfenkreuzes ausgebildet. Besonders bevorzugt ist die Durchführung zumindestens auf einem Teilbereich parallel zur Mittenachse angeordnet. Es ist somit eine Anordnung einer Durchführung innerhalb einer im Zapfenkreuz vorhandenen Zentralausnehmung möglich. Um den möglichen Beschleunigungen standhalten zu können ist eine stabile Befestigung erforderlich.

Erfindungsgemäß weist das Zapfenkreuz mindestens zwei getrennte Durchführungen für Schmiermittel auf. Diese Durchführungen können für die Beaufschlagung mit Schmiermittel genutzt werden. Damit ist es möglich von zwei Kreuzgelenkenden aus alle vier Lagerungen zu schmieren, indem zwei der Lagerungen mittels der ersten und der zweiten Durchführung Schmiermittel beaufschlagt werden können.

Bei einer bevorzugten Ausführungsform eines Zapfenkreuzes sind vorzugsweise zwei der Schmiermitteldurchführungen in einem Winkel von 90° angeordnet. Jede einzelne Durchführung kann geradlinig oder gewinkelt ausgeführt sein.

Bei einer bevorzugten Ausführungsform ist vorgesehen, dass die Durchführung parallel zu einer der Mittenachsen angeordnet ist. Dadurch sind die Durchführungen geradlinig ausgeführt, was sich leicht fertigen lässt. Um alle Lager damit erreichen zu können sind die beiden Durchführungen bevorzugt in einem 90° Winkel zueinander versetzt angeordnet.

In einer weiteren Ausführungsform ist vorgesehen, dass mindestens eine Durchführung mit dem Zapfenkreuz einstückig ausgebildet ist. Damit ist gemeint, dass in dem Zapfenkreuz keine Bauteile eingebraucht sind, um die Durchführung bereitzustellen. Eine derartige Durchführung kann mittels einer Bohrung ausgebildet werden.

In einer bevorzugten Ausführungsform ist vorgesehen, dass Öffnungen von Durchführungen für Schmiermittel an zwei gegenüberliegenden Zapfenenden angeordnet sind und mittels dieser Durchführungen alle Axiallager schmierbar sind. Die Durchführungen müssen winkelig ausgeführt sein.

Erfindungsgemäß umfasst das Kreuzgelenk eine erste Gelenkgabel und eine zweite Gelenkgabel und ein Zapfenkreuz mit Zapfenkreuzenden, wobei Enden des Zapfenkreuzes in der ersten und der zweiten Gelenkgabel gelagert sind.

Erfindungsgemäß umfasst das Kreuzgelenk ein Zapfenkreuz. Dadurch ist es möglich mit einem verminderten Aufwand die Lager des Kreuzgelenkes zu schmieren. Es können mindestens von einer Gelenkgabelseite zwei Lager geschmiert werden. Es ist möglich eine Stillstandsposition vorzusehen, bei der von einer Gelenkgabelseite zumindestens eine schwer zugängliche Lagerung des Kreuzgelenkes mittels einer Durchführung mit Schmiermittel beaufschlagt werden kann.

In einer bevorzugten Ausführungsform eines Kreuzgelenkes ist vorgesehen, dass das Kreuzgelenk an zwei gegenüberliegenden Seiten jeweils zwei Schmiermittelzuführungen aufweist, wobei jede Schmiermittelzuführung genau einem Lager zugeordnet ist. Dadurch ist es möglich von diesen beiden Seiten alle Lagerungen des Kreuzgelenkes zu schmieren. Es ist insbesondere auch möglich bei einem nicht gebeugten Einbau vorzusehen, dass die Schmiermittelzuführung auf der nur rotierenden Gelenkgabel angerordnet ist. Durch Zuleitungen kann dann Schmiermittel von einer zentralen Schmiermittelzuführung den Schmiermittelzuführungen zugeführt werden. Durch die zentrale Schmiermittelzuführung können alle Lagerungen getrennt mit Schmiermittel beaufschlagt werden. Diese zentrale Schmiermittelzuführung kann auf der Gelenkgabel oder Gelenkwelle angeordnet sein. Damit ist ein Abschmieren besonders komfortabel durchführbar ohne dass ein Positionswechsel erforderlich ist.

In einer bevorzugten Ausführungsform eines Kreuzgelenkes ist vorgesehen, dass an zwei in einem Winkel von 90° angeordneten Positionen des Kreuzgelenkes vorgesehene Zuführungen für Schmiermittel vorgesehen sind, die vorzugsweise in vorgesehenen Deckel ausgebildet sind. Dadurch ist es komfortabel möglich in einer Stillstandsposition von einer Seite des Kreuzgelenkes alle Lagerungen des Kreuzgelenkes zu schmieren.

In einer weiteren Ausführungsform ist vorgesehen, dass das Kreuzgelenk vier Gelenkdeckel umfasst und Schmiermittelzuführungen nur in einem der Deckel ausgebildet sind. Das Zapfenkreuz weist drei Durchführungen auf, so dass den anderen Zapfenkreuzenden Schmiermittel durch die Durchführungen zugeführt werden kann
Es hat sich als vorteilhaft herausgestellt, eine Gelenkwelle mit einem erfindungsgemäßen Kreuzgelenk zu versehen. Dabei hat sich als besonders vorteilhaft herausgestellt die Schmiermittelzuführungen an gegenüberliegenden Zapfenenden vorzusehen. Dabei kann bei nicht gebeugtem Einbau eine zentrale Schmiermittelzuführung auf der Gelenkwelle angeordnet werden. Die zentrale Schmiermittelzuführung umfasst einzelne den einzelnen Lagerungen zugeordnete Schmiermittelzuführungen.

Ein erfindungsgemäßen Verfahren zum Abschmieren von Lagerungen einer Gelenkwelle, insbesondere von Radiallagern und Axiallager, eines Kreuzgelenkes, zeichnet sich dadurch aus, dass eine Stillstandsposition eingenommen wird und anschließend die einzelnen Lagerungen getrennt voneinander mit Schmiermittel beaufschlagt werden. Dadurch kann die Schmiermitteldosierung für jede Lagerung individuell dosiert werden. Bei der Schmiermitteldosierung kann das Schmiermittel mit unterschiedlichen Drücken beaufschlagt werden. Außerdem kann die Menge an eingebrachtem Schmiermittel individuell dosiert werden und somit sichergestellt werden, dass ausreichend geschmiert wurde.

Die erfindungsgemäße Lösung wird nachfolgend anhand einiger Ausführungsbeispiele näher beschrieben. Die gezeigten Ausführungsbeispiele können eigenständige erfinderische Aspekte beinhalten.

Es zeigt:
- Figur 1:: Gelenkwelle
- Figur 2:: Skizzierung von Schmiermittelzuführungen gegenüberliegend
- Figur 3:: Skizzierung von Schmiermittelzuführungen im 90° Winkel
- Figur 4:: Zapfenkreuz

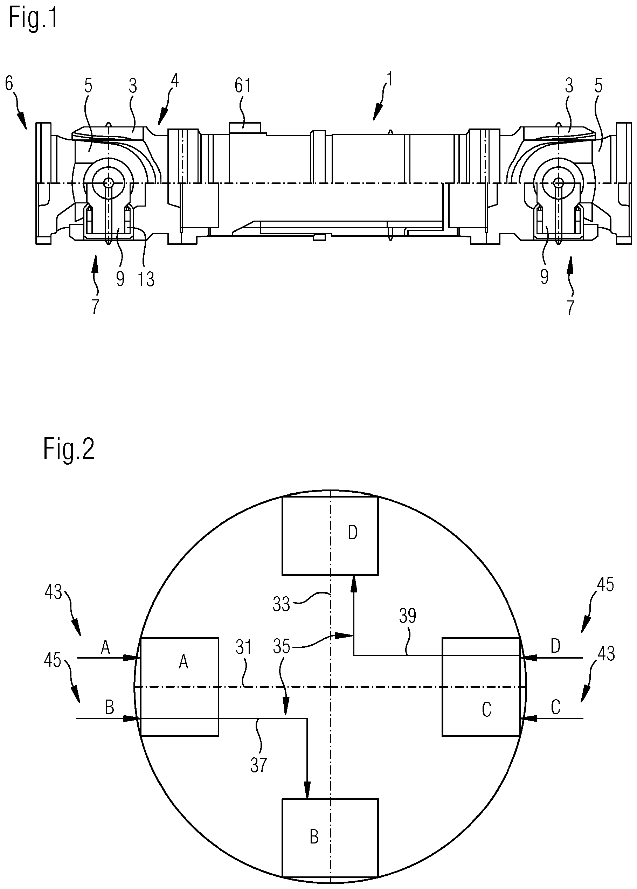

Figur 1 zeigt eine Gelenkwelle mit einem Kreuzgelenk an beiden Enden. Jedes der Kreuzgelenke weist eine erste Gelenkgabel 3 und eine zweite Gelenkgabel 5 auf. Die erste Gelenkgabel 3 ist über ein Zapfenkreuz 9 mit der zweiten Gelenkgabel 5 wirkverbunden. Bei Einleitung einer Drehbewegung über die erste Gelenkgabel 3 wird eine Drehbewegung auf die zweite Gelenkgabel 5 übertragen und umgekehrt. Dabei kann die Axialachse der ersten Gelenkgabel 3 winkelig zur Axialachse der zweiten Gelenkgabel 5 angeordnet sein. Dieser Winkel wird als Beugewinkel bezeichnet. Das einfache Kreuzgelenk 7 erzeugt, wenn es unter Beugewinkel läuft, eine Ungleichförmigkeit, d.h. auf der Antriebsseite wird es mit konstanter Drehzahl rotierend um dessen Axialachse angetrieben, aber auf der Abtriebsseite dreht es sich mal ein bisschen schneller und mal ein bisschen langsamer als die Antriebsseite. Die Ungleichförmigkeit nimmt mit dem Beugewinkel zu. Die Gelenkgabel, die in eingebautem Zustand nur eine Rotationsbewegung um seine Axialachse ausführt, wird als nicht gebeugtes Gelenkteil 4 bzw. Gelenkgabel bezeichnet.

In Figur 2 sind Durchführungen für eine Schmierung von Lagern 12 des Kreuzgelenkes 7 gezeigt. Das Kreuzgelenk 7 weist Radiallager 15 und Axiallager 13 auf. Durch die Radiallager 15 sind die Zapfenenden 11 radial in Bezug auf die Mittenachse des Zapfenkreuzes 9 gelagert. Durch die Axiallager 13 sind die Zapfen des Zapfenkreuzes 9 axial gelagert. In dem gezeigten Ausführungsbeispiel ist dieses Axiallager 13 endseitig am Zapfenende 11 vorgesehen.

Bei dem gezeigten Ausführungsbeispiel sind die Lagerungen der Enden des Zapfenkreuzes 9 sehr vereinfacht dargestellt und mit A, B, C und D bezeichnet. Bei diesem Ausführungsbeispiel ist einem Zapfen kreuzende A eine erste Schmiermittelzuführung 43 und eine zweite Schmiermittelzuführung 45 zugeordnet. Durch die erste Schmiermittelzuführung 43 werden die Lager dieses Zapfenendes mit Schmiermittel beaufschlagt. Dadurch kann zum einen neues Schmiermittel eingebracht werden und auch älteres Schmiermittel aus dem Lager durch das neue Schmiermittel herausgedrückt werden. Somit ist auf diese Weise auch ein Austausch von Schmiermittel möglich. Der Schmiermittelüberschuss tritt an einem Schmiermittelaustritt 51 wieder aus.

Die zweite Schmiermittelzuführung 45 ist über eine erste Durchführung 37 mit der Lagerung B verbunden. Über diese erste Durchführung 37 kann Schmiermittel der Lagerung B zugeführt werden. Die erste Durchführung 37 ist in diesem Ausführungsbeispiel gewinkelt ausgeführt und die Lagerung B ist in einem 90° Winkel zu der Lagerung A angeordnet. In gleicher Weise ist eine Schmierung der Lagerungen C und D vorgesehen. Dabei ist wiederum eine erste Schmiermittelzuführung 43 für die Schmierung für die dort angeordneten Lager vorgesehen. Die Lagerung D wird über eine zweite Durchführung 39 mit Schmiermittel versorgt. In diesem Ausführungsbeispiel sind die Zuführungen für Schmiermittel an zwei gegenüberliegenden Enden des Zapfenkreuzes vorgesehen. Dadurch ist es möglich bei einer nicht gebeugten Anordnung der Gelenkgabel 3, eine Verbindung zu einer zentral angeordneten Schmiermittelzuführung vorzusehen. Von dieser zentralen Schmiermittelzuführung können jeder Lagerung A, B, C, D Schmiermittel zugeführt werden. Dabei ist jeder Lagerung A, B, C, D eine eigene Schmiermittelzuführung 41 zugeordnet. Dadurch ist es möglich jedes Lager angepasst mit Schmiermittel zu beaufschlagen. Dadurch kann jede Lagerung abgestimmt an den tatsächlichen Bedarf mit Schmiermittel versorgt werden. Der Vorteil ist aber, dass bei einem Stillstand der Gelenkwelle, die Gelenkwelle gezielt in eine Position positioniert werden kann, bei der die zentrale Schmierung leicht zugänglich ist. Eine Schmierung der Lager ist bei Stillstand vorgesehen. Die Schmierung kann allerdings auch im Betrieb über eine Drehdurchführung erfolgen.

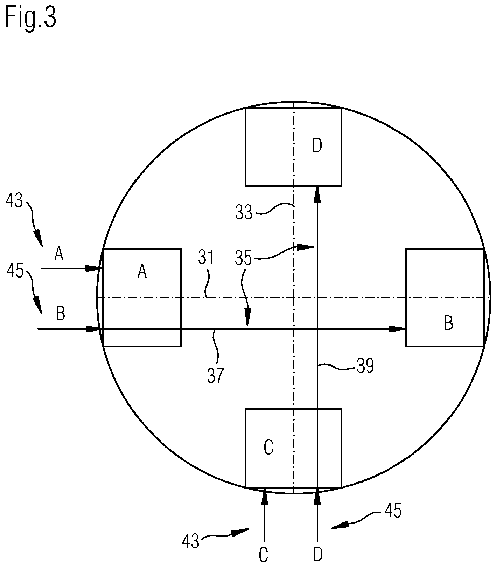

In Figur 3 ist eine alternative Ausführung gezeigt. Bei dieser Ausführung sind zwei Zapfenenden jeweils zwei Schmiermittelzuführungen zugeordnet. Die Schmiermittelzuführungen 41 sind in einem Winkel von 90° angeordnet. Dadurch ist es möglich ohne einen Wechsel auf die andere Seite des Kreuzgelenkes und damit der Gelenkwelle, alle Lager dieses Kreuzgelenkes bei Stilstand des Kreuzgelenkes 7 zu schmieren.

Bei dieser Ausführung ist die erste Durchführung 37 zur Lagerung B im Zapfenkreuz geradlinig ausgebildet. Die zweite Durchführung 39 zur Lagerung D ist auch geradlinig ausgeführt. Die erste Mittenachse 31 und die zweite Mittenachse 33 des Zapfenkreuzes 9 sind gestrichelt dargestellt.

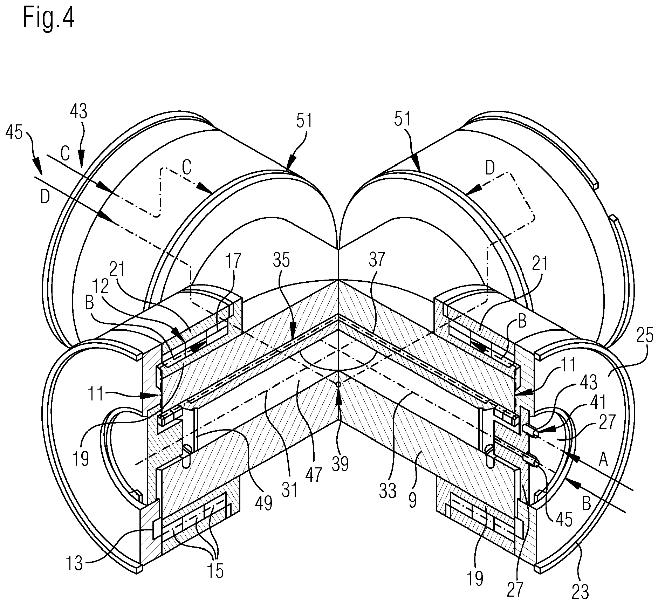

In Figur 4 ist der Aufbau eines Zapfenkreuzes mit Lagern detailliert dargestellt. Das Zapfenkreuz 9 ist einteilig ausgeführt. In dem Zapfenkreuz ist eine Zentralausnehmung 47 ausgebildet. Die Mittenachsen 31, und 33 des Zapfenkreuzes sind gestrichelt dargestellt. Diese Zentralausnehmung 47 ist endseitig durch einen inneren Deckel 27 verschlossen. Innerhalb der Zentralausnehmung ist in jedem Zapfenenden eine Verschlussplatte 49 angeordnet, so dass ein Spalt zwischen innerem Deckel 27 und Verschlussplatte 49 besteht. In dem inneren Deckel 27 ist eine Schmiermittelzuführung 45 ausgebildet. Bei Beaufschlagung mit Schmiermittel gelangt das Schmiermittel in den Spalt zwischen innerem Deckel 27 und Verschlussplatte 49. Von dort gelangt das Schmiermittel in die in dem Zapfenkreuz ausgebildete Schmiermittelzuführung 41. In dem konkreten Ausführungsbeispiel gelangt das Schmiermittel in die erste Durchführung 37. Die Durchführung ist gemäß Figur 2 gewinkelt ausgeführt. Über diese Durchführung gelangt das Schmiermittel zur zugeordneten Lagerung B. In der Lagerung B wird das Schmiermittel über das Radiallager 15 der Lagerung B zum Axiallager 13 geleitet. Durch das Axiallager kann das Schmiermittel am Schmiermittelaustritt 51 wieder austreten. Dadurch kann auch ein teilweiser Austausch des Schmiermittels durchgeführt werden, indem solange Schmiermittel eingeführt wird, bis am Schmiermittelaustritt 51 wieder nahezu Schmiermittel ohne Verunreinigungen austritt.

Das Radiallager 15 ist als Wälzlager mit Wälzkörpern 17 ausgeführt. Die Wälzkörper 17 sind zwischen einem inneren Lagerelement 19 und einem äußeren Lagerelement 21 angeordnet. Das innere Lagerelement 19 und das äußere Lagerelement 21 sind koaxial zum Zapfen angeordnet. Axial endseitig ist ein äußerer Deckel 25 angeordnet. Dieser äußere Deckel 25 wird durch einen Sicherungsring 23 in der Ausnehmung der Gelenkgabel gesichert. Wie insbesondere aus dieser Darstellung ersichtlich wird, werden nur wenige Bauteile benötigt, um von einem Zapfenende aus zwei Lagerungen schmieren zu können.

### Bezugszeichenliste:

- 1: Gelenkwelle
- 3: Erste Gelenkgabel
- 4: nicht gebeugtes Gelenkteil
- 5: Zweite Gelenkgabel
- 6: gebeugtes Gelenkteil
- 7: Kreuzgelenk
- 9: Zapfenkreuz
- 11: Enden Zapfenkreuz
- 12: Lagerung, Lager gesamt
- 13: Axiallager
- 15: Radiallager
- 17: Wälzkörper
- 19: Inneres Lagerelement
- 21: Äußeres Lagerelement
- 23: Sicherungsring
- 25: Äußerer Deckel
- 27: Innerer Deckel

- 31: Erste Mittenachse
- 33: Zweite Mittenachse
- 35: Durchführung für Schmiermittel
- 37: Erste Durchführung
- 39: Zweite Durchführung
- 41: Schmiermittelzuführung
- 43: Erste Schmiermittelzuführung
- 45: Zweite Schmiermittelzuführung
- 47: Zentralausnehmung Zapfenkreuz
- 49: Verschlussplatte
- 51: Schmiermittelaustritt
- 61: Zentrale Schmiermittelzuführung

## Patentansprüche

1. Kreuzgelenk (7) mit einer ersten Gelenkgabel (3) und einer zweiten Gelenkgabel (5) und mit einem Zapfenkreuz (9), wobei Enden (11) des Zapfenkreuzes (9) in der ersten (3) und der zweiten Gelenkgabel (5) gelagert sind, dass das Zapfenkreuz (9) zwei getrennte Durchführungen (37, 39), für Schmiermittel aufweist, wobei jede Durchführung (37, 39) für die Zuführung von Schmiermittel zu genau einer einem Zapfenende (11) zugeordneten Lagerung (A, B, C, D) vorgesehen ist, wobei das Zapfenkreuz (9) beabstandet von mindestens einer der Mittenachsen (31, 33) eine der Durchführungen (37, 39) für Schmiermittel aufweist,
**dadurch gekennzeichnet, dass**
an zwei gegenüberliegenden Seiten des Kreuzgelenkes (7) das Kreuzgelenk (7) jeweils zwei Schmiermittelzuführungen (43, 45) aufweist, wobei jede Schmiermittelzuführung (43, 45) genau einer Lagerung (A, B, C, D) zugeordnet ist, oder dass an zwei in einem Winkel von 90° angeordneten Positionen des Kreuzgelenkes (9) vorgesehene Zuführungen (41) für Schmiermittel vorgesehen sind, dabei ist jeder Lagerung A, B, C, D eine eigene Schmiermittelzuführung (41) zugeordnet.

2. Kreuzgelenk (7) nach Anspruch 1,
**dadurch gekennzeichnet,**
**dass** mindestens eine vorzugsweise zwei der Schmiermitteldurchführungen (37, 39) einen 90° Winkel aufweist.

3. Kreuzgelenk (7) nach Anspruch 1 oder Anspruch 2,
**dadurch gekennzeichnet,**
**dass** die Durchführung (37, 39) parallel zu einer der Mittenachsen (31, 33) angeordnet ist.

4. Kreuzgelenk (7) nach einem der vorhergehenden Ansprüche,
**dadurch gekennzeichnet,**
**dass** mindestens eine Durchführung (37, 39) mit dem Zapfenkreuz (9) einstückig ausgebildet ist.

5. Kreuzgelenk (7) nach einem der vorhergehenden Ansprüche,
**dadurch gekennzeichnet,**
**dass** Öffnungen von Durchführungen (37, 39) für Schmiermittel an zwei gegenüberliegenden Zapfenenden (11) angeordnet sind und mittels dieser Durchführungen (37, 39) alle Lagerungen (12), insbesondere alle Axiallager (13) und Radiallager (15), schmierbar sind.

6. Kreuzgelenk (7) nach einem der vorhergehenden Ansprüche,
**dadurch gekennzeichnet,**
**dass** nur in einem einem Zapfen des Zapfenkreuzes (9) einem zugeordneten Gelenkdeckel (25, 27) eine Schmiermittelzuführung (41) ausgebildet ist.

7. Gelenkwelle mit einem Kreuzgelenk (7) nach einem der vorhergehenden Ansprüche,
**dadurch gekennzeichnet,**
**dass** auf der Gelenkwelle (1) oder einer der Gelenkgabel (3) eine zentrale Schmiermittelzuführung (61) vorgesehen ist und diese Schmiermittelzuführung (61) mit den den Zapfenenden (11) zugeordneten Zuführungen (43, 45) verbunden ist.

8. Gelenkwelle nach Anspruch 7,
**dadurch gekennzeichnet,**
**dass** die zentrale Schmiermittelzuführung (61) auf einer nicht gebeugten Gelenkgabel (3) oder Gelenkwelle (1) angeordnet ist.

9. Verfahren zum Abschmieren von Lagern (12) eines Kreuzgelenkes (7) nach einem der vorhergehenden Ansprüche,
**dadurch gekennzeichnet,**
**dass** ein Schmieren der Lagerungen (12) im Stillstand vorgesehen ist.

10. Verfahren nach Anspruch 9,
**dadurch gekennzeichnet,**
**dass** die mit den Verfahrensschritten:
- Im Stillstand des Kreuzgelenkes (7) wird Schmiermittel von zwei Enden (11) des Zapfenkreuzes (7) zugeführt, wobei jede Lagerung eines Zapfens einzeln mit Schmiermittel beaufschlagt wird bis Schmiermittel an dem Schmiermittelaustritt (51) dieser Lagerung (A, B, C, D) austritt.

## Claims

1. Universal joint (7) having a first joint yoke (3) and a second joint yoke (5) and a journal cross (9), wherein ends (11) of the journal cross (9) are mounted in the first (3) and the second joint yoke (5), that the journal yoke (9) has two separate feedthroughs (37, 39) for lubricant, wherein each feedthrough (37, 39) is provided for supplying lubricant to precisely one mounting (A, B, C, D) assigned to one journal end (11), wherein the journal cross (9) has one of the feedthroughs (37, 39) for lubricant spaced apart from at least one of the centre axes (31, 33),
**characterized in that**
the universal joint (7) has in each case two lubricant feed lines (43, 45) on two mutually opposite sides of the universal joint (7), wherein each lubricant feed line (43, 45) is assigned to precisely one mounting (A, B, C, D), or **in that** feed lines (41) for lubricant are provided at two positions of the universal joint (9) that are arranged at an angle of 90°, whereby each mounting A, B, C, D is assigned one dedicated lubricant feed line (41).

2. Universal joint (7) according to Claim 1, **characterized in that**
at least one, preferably two, of the lubricant feedthroughs (37, 39) has an angle of 90°.

3. Universal joint (7) according to Claim 1 or Claim 2,
**characterized in that**
the feedthrough (37, 39) is arranged parallel to one of the centre axes (31, 33).

4. Universal joint (7) according to one of the preceding claims,
**characterized in that**
at least one feedthrough (37, 39) is formed in one piece with the journal cross (9).

5. Universal joint (7) according to one of the preceding claims,
**characterized in that**
openings of feedthroughs (37, 39) for lubricant are arranged at two opposing journal ends (11), and all the mountings (12), in particular all the thrust bearings (13) and radial bearings (15), are capable of being lubricated by means of these feedthroughs (37, 39).

6. Universal joint (7) according to one of the preceding claims,
**characterized in that**
a lubricant feed line (41) is formed only in one joint cap (25, 27) assigned to a journal of the journal cross (9).

7. Cardan shaft having a universal joint (7) according to one of the preceding claims,
**characterized in that**
a central lubricant feed line (61) is provided on the cardan shaft (1) or on one of the joint yokes (3), and this lubricant feed line (61) is connected to the feed lines (43, 45) assigned to the journal ends (11).

8. Cardan shaft according to Claim 7,
**characterized in that**
the central lubricant feed line (61) is arranged on a non-articulated joint yoke (3) or cardan shaft (1) .

9. Method for lubricating bearings (12) of a universal joint (7) according to one of the preceding claims, **characterized in that**
lubricating of the mountings (12) is provided at a standstill.

10. Method according to Claim 9,
**characterized in that**
the method comprises the following steps:
- at a standstill of the universal joint (7), lubricant is supplied from two ends (11) of the journal cross (7), each mounting of a journal having lubricant applied individually until lubricant emerges at the lubricant outlet (51) of this mounting (A, B, C, D).

## Revendications

1. Articulation en croix (7) avec une première fourche d'articulation (3) et une deuxième fourche d'articulation (5) et avec une croix de tourillons (9), les extrémités (11) de la croix de tourillons (9) étant logées dans la première (3) et la deuxième fourche d'articulation (5), la croix de tourillons (9) présentant deux passages (37, 39) séparés pour le lubrifiant, chaque passage (37, 39) étant prévu pour l'amenée de lubrifiant à exactement un palier (A, B, C, D) associé à une extrémité de tourillon (11), la croix de tourillons (9) présentant, à distance d'au moins un des axes centraux (31, 33), un des passages (37, 39) pour le lubrifiant,
**caractérisée en ce que**
sur deux côtés opposés de l'articulation en croix (7), l'articulation en croix (7) présente respectivement deux amenées de lubrifiant (43, 45), chaque amenée de lubrifiant (43, 45) étant associée exactement à un palier (A, B, C, D), ou **en ce que** des amenées (41) pour le lubrifiant sont prévues en deux positions de l'articulation en croix (9) agencées selon un angle de 90°, une amenée de lubrifiant (41) propre étant associée à chaque palier A, B, C, D.

2. Articulation en croix (7) selon la revendication 1, **caractérisée en ce**
**qu'**au moins un, de préférence deux, des passages de lubrifiant (37, 39) présente un angle de 90°.

3. Articulation en croix (7) selon la revendication 1 ou la revendication 2,
**caractérisée en ce que**
le passage (37, 39) est agencé parallèlement à l'un des axes centraux (31, 33).

4. Articulation en croix (7) selon l'une quelconque des revendications précédentes,
**caractérisée en ce**
**qu'**au moins un passage (37, 39) est réalisé d'une seule pièce avec la croix de tourillons (9).

5. Articulation en croix (7) selon l'une quelconque des revendications précédentes,
**caractérisée en ce que**
des ouvertures de passages (37, 39) pour lubrifiant sont agencées à deux extrémités de tourillon opposées (11) et tous les paliers (12), notamment tous les paliers axiaux (13) et les paliers radiaux (15), peuvent être lubrifiés au moyen de ces passages (37, 39).

6. Articulation en croix (7) selon l'une quelconque des revendications précédentes,
**caractérisée en ce**
**qu'**une amenée de lubrifiant (41) n'est réalisée que dans un couvercle d'articulation (25, 27) associé à un tourillon de la croix de tourillons (9).

7. Arbre articulé avec un articulation en croix (7) selon l'une quelconque des revendications précédentes, **caractérisé en ce**
**qu'**une amenée centrale de lubrifiant (61) est prévue sur l'arbre articulé (1) ou sur l'une des fourches d'articulation (3) et cette amenée de lubrifiant (61) est reliée aux amenées (43, 45) associées aux extrémités de tourillon (11).

8. Arbre articulé selon la revendication 7, **caractérisé en ce que**
l'amenée de lubrifiant centrale (61) est agencée sur une fourche d'articulation (3) ou un arbre articulé (1) non fléchi.

9. Procédé de lubrification de paliers (12) d'une articulation en croix (7) selon l'une quelconque des revendications précédentes,
**caractérisé en ce**
**qu'**une lubrification des paliers (12) à l'arrêt est prévue.

10. Procédé selon la revendication 9,
**caractérisé en ce que**
le procédé comprend les étapes suivantes :
- à l'arrêt de l'articulation en croix (7), du lubrifiant est amené par deux extrémités (11) de la croix de tourillons (7), chaque palier d'un tourillon étant alimenté individuellement en lubrifiant jusqu'à ce que du lubrifiant sorte par la sortie de lubrifiant (51) de ce palier (A, B, C, D).
